# FASCICULE DE BREVET EUROPEEN

(11) **EP 2 627 952 B1**
(45) Date de publication et mention de la délivrance du brevet: **30.11.2016**
(21) Numéro de dépôt: 11773746.0
(22) Date de dépôt: 23.09.2011
(51) Int. Cl.: B05B 17/06, B05B 7/00, B60H 1/32, F24F 6/12, B60H 3/02

(54) **DISPOSITIF DE RAFRAICHISSEMENT DE L'AIR D'UNE ENCEINTE**
VORRICHTUNG ZUR KÜHLUNG DER LUFT IN EINER KAMMER
DEVICE FOR COOLING THE AIR IN A CHAMBER

(30) Priorité: 15.10.2010 FR 1058448
(43) Date de publication de la demande: 21.08.2013
(73) Titulaire: Peugeot Citroën Automobiles SA, 78140 Vélizy Villacoublay (FR)
(72) Inventeur: PINTAT, Bruno, F-92190 Meudon (FR); DUMUR, Denis, F-78990 Elancourt (FR)
(86) Numéro de dépôt international: PCT/FR2011/052203
(87) Numéro de publication internationale: WO 2012/049390

(56) Documents cités:
- WO-A1-2005/053978
- WO-A1-2008/050878
- FR-A1- 2 653 073
- FR-A1- 2 714 333
- JP-A- 61 181 718
- JP-A- 2007 315 633

## Description

L'invention se situe dans le domaine des équipements de rafraîchissement d'ambiance d'un espace clos. En particulier l'invention concerne un dispositif et un procédé pour rafraîchir l'air d'un bâtiment ou d'une serre ou encore de l'habitacle d'un véhicule. Plus précisément, l'invention s'adresse aux systèmes de rafraichissement de l'habitacle d'un véhicule automobile par exemple pour assurer le confort thermique des passagers situés sur les sièges arrière.

Dans un véhicule automobile avec double rangée de sièges, le confort thermique des passagers arrière est actuellement géré de différentes façons. Par exemple, il peut faire l'objet d'une simple ventilation additionnelle, mais l'air soufflé en direction des passagers n'est alors pas refroidi. Il peut faire l'objet d'une ventilation réfrigérée via le climatiseur principal au moyen ou non d'un pulseur d'air relais. Un premier inconvénient est qu'une ventilation réfrigérée sans pulseur d'air relais ne permet pas que l'air soit soufflé avec une vitesse suffisante pour garantir un confort thermique des passagers situés à l'arrière du véhicule. Un deuxième inconvénient est que, si la mise en place d'un pulseur d'air relais est efficace, elle implique un besoin frigorifique supplémentaire au niveau de l'évaporateur de la boucle froide du système de climatisation pour réfrigérer une quantité plus importante d'air. Ceci conduit à une augmentation de la quantité de carburant consommée. Il est également possible d'installer un climatiseur additionnel avec un évaporateur secondaire. Malheureusement cette solution rencontre également un problème d'augmentation de consommation du carburant ainsi que des inconvénients additionnels relatifs au coût et à la difficulté d'implantation d'un second climatiseur au niveau de l'habitacle.

Par ailleurs les systèmes classiques de climatisation génèrent un flux d'air certes rafraîchi mais également asséché ce qui peut engendrer un certain inconfort au niveau des passagers notamment lorsqu'ils sont porteurs de lentilles de contact.

Il est déjà connu de l'art antérieur des systèmes permettant de rafraîchir l'habitacle d'un véhicule sans l'assécher. Par exemple, le document FR2714333 permet de rafraichir l'habitacle d'un véhicule en y faisant circuler de l'air en provenance du dessous du véhicule entre les parties basses et hautes de l'habitacle et en y pulvérisant de fines gouttelettes. Malheureusement ce système est conçu pour fonctionner à l'arrêt du véhicule et de préférence avant que les passagers ne le pénètrent. Il se forme en effet un brouillard dans le véhicule qui nuirait à la fois à la visibilité et au confort des occupants du véhicule si le dispositif était actionné pendant la mise en marche du véhicule.

Le document FR2653073 propose d'humidifier et de réfrigérer l'habitacle d'un véhicule en faisant évaporer de l'eau à l'état de très fines gouttelettes par le système de ventilation du véhicule. Un tel dispositif permet de faire diminuer la température de l'air entrant dans le véhicule de 5 à 7 degrés mais il ne permet pas d'obtenir un différentiel plus important par rapport à la température extérieure et ne garantit donc pas un confort thermique optimal de passagers en toutes circonstances. Par ailleurs, il n'offre pas de solution concernant le confort thermique des passagers arrière qui sont éloignés des ouïes de sortie du système de ventilation.

Le document WO2008/050878 présente quant à lui un dispositif permettant d'humidifier l'air réfrigéré en provenance du système de climatisation du véhicule. Pour ce faire, il présente des moyens pour condenser l'eau présente dans l'air de l'habitacle afin de l'atomiser et de la renvoyer dans le flux d'air réfrigéré sous forme de très fines gouttelettes. Malheureusement un tel système, s'il apporte un début de solution aux problèmes d'assèchement de l'air réfrigéré soufflé ne résout pas les problèmes liés à l'assèchement de l'air dans l'habitacle d'une manière générale ou à la surconsommation des véhicules liés à l'installation de dispositifs dédiés au rafraichissement des passagers situés à l'arrière du véhicule.

Le document WO2005/053978 présente un dispositif permettant d'humidifier l'air réfrigéré en provenance du système de climatisation du véhicule selon le préambule de la revendication 1.

L'invention a pour objectif de proposer une solution aux problèmes rencontrés par l'art antérieur en termes de rafraîchissement d'une enceinte comme par exemple l'habitacle d'un véhicule qui soit économe en termes de consommation d'énergie et qui garantisse le confort pour les occupants de ladite enceinte. L'invention a également pour objectif d'apporter une solution simple et économique aux problèmes rencontrés par l'art antérieur concernant le rafraîchissement des passagers situés à l'arrière d'un véhicule.

A cet effet l'invention a pour objet un véhicule comportant un dispositif de rafraîchissement conforme à la partie caractérisante de la revendication 1.

De préférence, le dispositif est indépendant de tout système de climatisation, ventilation ou de renouvellement de l'air de l'enceinte dans laquelle ledit dispositif est situé.

Dans un mode de réalisation préféré de l'invention, les moyens pour capter et accélérer l'air sont constitués par au moins un pulseur d'air.

De préférence, le système de nébulisation présente une chambre de nébulisation reliée par un conduit de liaison à un conduit d'air soufflé acheminant le flux d'air soufflé en provenance du pulseur d'air vers la sortie dudit dispositif.

Selon une mise en oeuvre de l'invention, la chambre de nébulisation est associée à un ventilateur apte à générer dans la dite chambre un flux d'air secondaire qui va entraîner le liquide nébulisé et l'injecter dans le conduit d'air soufflé via le conduit de liaison.

Selon une autre mise en oeuvre de l'invention, le conduit d'air soufflé présente un embranchement définissant un conduit principal et un conduit secondaire, et en ce que ledit conduit secondaire débouche sur la chambre de nébulisation de telle sorte à y acheminer un flux d'air secondaire qui va entraîner le liquide nébulisé et l'injecter dans le conduit principal via le conduit de liaison.

Avantageusement, la chambre de nébulisation est couplée à un réservoir de liquide à nébuliser et est dotée de moyens de détection du niveau de liquide à nébuliser actionnant son approvisionnement en liquide à nébuliser depuis le réservoir lorsque le niveau de liquide à nébuliser est au-dessous d'un seuil déterminé.

De manière optionnelle, les moyens de détection du niveau du liquide à nébuliser actionnent l'arrêt du système de nébulisation lorsque le niveau de liquide à nébuliser est au-dessous d'un seuil déterminé.

Selon une mise en oeuvre préférée de l'invention, le réservoir est constitué par au moins une cartouche préremplie de liquide à nébuliser et/ou comprend des moyens pour recevoir au moins une cartouche additionnelle préremplie contenant un additif concentré à mélanger au liquide à nébuliser.

Préférentiellement, le dispositif présente en outre au moins une grille d'évacuation des condensats de préférence disposée à l'extrémité du conduit d'air soufflé de telle sorte à être traversée par le flux d'air additionné de liquide nébulisé avant que ledit flux d'air ne soit éjecté dudit dispositif de telle sorte à collecter le condensat éventuel de liquide nébulisé en vue de son évacuation.

Avantageusement, il présente en outre des moyens pour que le condensat présent dans le conduit d'air soufflé et sur la grille d'évacuation des condensats soit évacué par exemple dans un bac à condensats, de préférence il présente également des moyens pour acheminer le condensat dans le réservoir associé à la chambre de nébulisation en vue de son recyclage.

Selon un mode de réalisation préféré de l'invention, le dispositif comprend en outre un système de commande permettant de régler indépendamment la puissance de nébulisation du système de nébulisation et la vitesse de sortie du flux d'air soufflé.

De préférence, le dispositif présent dans la console centrale comprend un bac à condensats agencé pour permettre l'évacuation du condensat par gravité quelle que soit l'inclinaison du véhicule.

Un autre objet de l'invention est un véhicule tel que décrit précédemment comprenant en outre un système de climatisation à boucle froide.

On aura compris que la mise en oeuvre de l'invention consiste à injecter du liquide nébulisé dans un conduit d'air soufflé. L'invention consiste à refroidir l'air par augmentation de son hygrométrie. Pour ce faire de l'eau est injectée dans un flux d'air aspiré depuis une enceinte, c'est-à-dire un espace clos comme par exemple l'habitacle d'un véhicule, sous forme de fines gouttelettes d'eau nébulisée. Ces fines gouttelettes sont en partie évaporées par le flux d'air qui s'en trouve donc naturellement refroidi. L'invention est remarquable en ce qu'au contraire des dispositifs de climatisation classiques où le fait de générer un air refroidi diminue l'hygrométrie de l'air mesuré à la sortie du dispositif par rapport à l'air qui l'a pénétré (donc l'assèche), elle propose un dispositif où le fait de générer un air refroidi augmente l'hygrométrie de l'air à la sortie du dispositif par rapport à l'air qui l'a pénétré (donc l'humidifie). L'invention est également remarquable en ce qu'elle ne refroidi que l'air déjà présent dans l'enceinte et le refroidit et le maintien à une température donnée par différents cycles de refroidissement au sein du dispositif selon l'invention. En effet, selon l'invention, l'air qui est refroidi est l'air déjà présent dans l'enceinte où se situe le dispositif. Ce qui signifie que cet air est capté, refroidi, éjecté du dispositif mais peut être à nouveau capté et réintroduit dans le dispositif pour être refroidi à nouveau dans un nouveau cycle. De ce fait, la différence de température pouvant être obtenue par le dispositif de l'invention est plus importante que si l'air capté provenait de l'extérieur de l'enceinte pour circuler dans l'enceinte et être évacué de l'enceinte dans le cadre d'un renouvellement de l'air de l'enceinte. A la différence d'un système de climatisation traditionnel qui refroidit et renouvelle l'air d'une enceinte et qui donc nécessite une ouverture sur l'air extérieur à l'enceinte, le dispositif selon l'invention va uniquement refroidir l'air déjà présent dans l'enceinte sans le renouveler. De ce fait il n'est pas besoin de lui donner un accès à l'air extérieur à l'enceinte et peut donc être installé loin de toute source d'aération ou de ventilation de l'enceinte. Le dispositif de l'invention est indépendant de tout système de renouvellement de l'air de l'enceinte dans lequel il est situé. De plus le fait de refroidir l'air ambiant présent dans l'enceinte par cycles de refroidissement successifs permet d'atteindre graduellement les températures recherchées pour l'air soufflé ce qui diminue la sensation de froid initiale que peut ressentir l'occupant de l'enceinte au moment de la mise en marche du dispositif. Enfin, le maintien de l'air ambiant à une température donnée va nécessiter une dépense en énergie minimisée. L'invention est également remarquable en ce qu'elle peut être actionnée parallèlement à un système de climatisation à boucle froide pour l'assister et contrebalancer l'assèchement de l'air qu'il provoque. L'invention sera bien comprise et d'autres aspects et avantages apparaîtront plus clairement à la lecture de la description qui suit donnée à titre d'exemple en référence aux dessins annexés sur lesquels :
- La figure 1 est un schéma de principe d'un dispositif selon l'invention.
- La figure 2 est un graphique montrant les différences de températures constatées entre l'air capté à l'entrée et l'air éjecté à la sortie du dispositif selon l'invention.
- La figure 3 est un graphique de comparaison des prestations obtenues entre un système classique de réfrigération par un ventilateur relais et un dispositif selon l'invention.

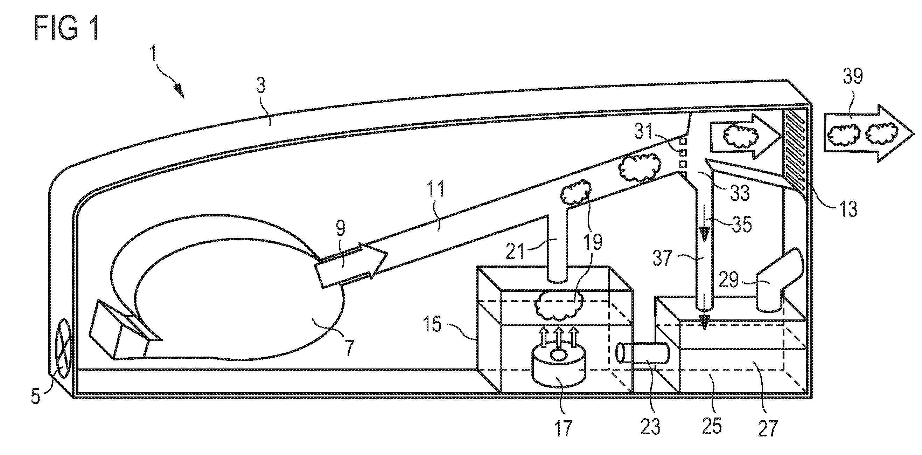

On se reportera à la figure 1 présentant un dispositif 1 de rafraîchissement de l'air d'une enceinte close selon l'invention. Dans l'invention le dispositif 1 de rafraîchissement de l'air est incorporé dans une console centrale 3 d'un véhicule automobile. Néanmoins, l'homme du métier pourra adapter sans peine un tel dispositif 1 au rafraîchissement de l'air d'autres espaces clos comme par exemple des vérandas, des serres, des pièces, des bâtiments, des ascenseurs, etc. On rappelle que la console centrale 3 d'un véhicule automobile se situe traditionnellement sous le tableau de bord et est positionnée entre les sièges du conducteur et du passager avant.

Selon l'invention la console centrale 3 forme le boîtier recevant le dispositif 1 de rafraîchissement de l'air selon l'invention qui comporte une ouïe d'entrée d'air 5 de préférence munie d'un filtre (non représenté). Le dispositif 1 selon l'invention va capter l'air de l'enceinte (ici l'habitacle du véhicule) et l'accélérer de sorte à créer un flux d'air soufflé 9 au moyen, par exemple, d'un pulseur 7 d'air. Le pulseur 7 aspire donc l'air de l'habitacle du véhicule grâce à une turbine et génère un flux d'air 9 qui est soufflé dans un conduit 11 d'air soufflé en direction des ouïes de sorties 13 du dispositif par exemple des diffuseurs disposés à une extrémité de la console centrale 3. Selon l'invention le dispositif 1 de rafraîchissement de l'air est incorporé dans la console centrale 3 d'un véhicule, et le conduit 11 d'air soufflé est orienté en direction de l'arrière du véhicule de telle sorte à ce que l'air soit soufflé en direction des sièges arrière du véhicule. Néanmoins, ce mode de réalisation ne saurait être limitatif de l'invention et d'autres configurations d'entrée et de sortie de l'air du dispositif 1 peuvent être facilement envisagées par l'homme du métier.

Selon l'invention le dispositif 1 de rafraîchissement de l'air comprend au moins un système de nébulisation d'eau. Les technologies de nébulisation de l'eau sont bien connues de l'homme du métier et ne seront donc pas détaillées dans le présent mémoire. Pour la clarté de l'exposé, on précisera néanmoins que le nébuliseur comprend un oscillateur piézo-électrique 17 qui lorsqu'il est mis sous tension va vibrer à très haute fréquence. Par exemple pour les nébuliseurs ultrasoniques, la surface vibrante est actionnée par des ultrasons, donc par une fréquence supérieure à 20000 HZ. L'oscillateur piézo-électrique 17 est immergé dans un volume d'eau (ou de liquide à nébuliser) ce qui va générer à la surface de ce volume d'eau une brume composée de fines gouttelettes 19 présentant une taille moyenne inférieure à 5 µm.

Le système de nébulisation se présente donc sous forme d'une chambre de nébulisation 15 comprenant un élément vibrant 17 sous tension. Le système de nébulisation, et en particulier de l'élément 17 vibrant piézo-électrique est alimenté de manière classique par un courant continu et en très basse tension (par exemple 12 ou 20 Volts). La chambre de nébulisation 15 présente une entrée d'eau permettant son alimentation en liquide 27 à nébuliser (par exemple, de l'eau). Afin d'éviter un endommagement de l'élément piézo-électrique 17, l'homme du métier prendra soin de maintenir dans la chambre de nébulisation 15 un volume minimal de liquide à nébuliser 27. Pour ce faire, la chambre de nébulisation 15 est reliée par un conduit 23 à un réservoir 25 de liquide 27 à nébuliser. Il est entendu qu'il est possible de nébuliser toutes sortes de liquides et par exemple de l'eau. Le dispositif 1 peut ainsi être approvisionné par exemple en eau déminéralisée, ou en eau du robinet, ou en eau additionnée de produits chimiques comme par exemple des désinfectants ou mélangée à des huiles essentielles ou encore de tout autre liquide ou solution liquide pouvant être utilisée dans le cadre de l'invention.

De préférence, le système de nébulisation présente un détecteur de niveau du liquide présent dans la chambre 15 de nébulisation. Lorsque celui-ci descend en dessous d'un seuil déterminé du liquide à nébuliser 27 en provenance du réservoir 25 sera introduit dans la chambre de nébulisation 15. Afin de tenir compte des variations de hauteur du niveau de liquide contenu dans ladite chambre 15 générées par le déplacement du véhicule et par exemple du fait de la prise de virage ou des pentes gravies ou descendues, le détecteur de niveau de liquide à nébuliser 27 pourra par exemple être couplé avec un système de capteurs permettant de mesurer le poids de la chambre de nébulisation 15. De préférence, lorsque le niveau de liquide à nébuliser 27 dans la chambre de nébulisation 15 est en dessous dudit seuil déterminé ou d'un autre seuil à définir, les moyens de détection du niveau de liquide commanderont alors l'arrêt du système de nébulisation afin de protéger l'élément vibrant 17. Ceci est particulièrement avantageux dans le cas où il n'est pas possible d'introduire un complément de liquide à nébuliser 27 parce que le réservoir 25 est vide,

Comme on peut le voir sur l'exemple de réalisation présenté à la figure 1, le réservoir 25 peut être rempli directement par l'utilisateur. Il présente à cet effet un goulot 29 permettant son remplissage. Néanmoins, dans une variante de l'invention, le réservoir est constitué par une cartouche préremplie (non représentée) de liquide à nébuliser 27 que l'utilisateur remplacera une fois vidée. Ceci est particulièrement avantageux si l'on souhaite maîtriser la composition ou la qualité du liquide à nébuliser 27 introduit dans le dispositif. Par exemple, afin d'éviter un entartrage à long terme du dispositif de rafraîchissement, il est préférable d'utiliser de l'eau déminéralisée. Eventuellement, le réservoir pouvant être directement rempli par l'utilisateur ou se présentant sous forme de cartouches préremplies de liquide à nébuliser, comprend en outre des moyens pour recevoir au moins une cartouche additionnelle préremplie contenant un additif concentré à mélanger au liquide à nébuliser. Ceci est particulièrement utile si on souhaite ajouter des parfums ou des solutions désinfectantes au liquide à nébuliser. Avantageusement, le réservoir présentera alors des moyens de mélange.

La brume constituée de gouttelettes de liquide nébulisé 19 générée par le système de nébulisation est ensuite injectée dans le conduit d'air soufflé 11 via un conduit de liaison 21 reliant la chambre de nébulisation 15 au conduit d'air soufflé 11. A cette fin, le système de nébulisation peut être associé à un ventilateur (non représenté) qui va faire circuler au moyen d'un flux d'air secondaire, le liquide nébulisé 19 -sous forme donc de fines gouttelettes- depuis la chambre de nébulisation 15 jusqu'audit conduit 11 d'air soufflé où elles seront entraînées par le flux d'air soufflé 9.

Dans une variante de l'invention (non représentée), le système de nébulisation ne comprend pas de ventilateur. En revanche au moins une partie de l'air soufflé est détournée du conduit principal 11 vers un conduit secondaire qui débouche sur la chambre de nébulisation 15 de telle sorte à y acheminer un flux d'air secondaire qui va entraîner le liquide nébulisé 19 et l'injecter dans le conduit principal via le conduit de liaison 21.

On notera qu'une partie du liquide nébulisé 19 qui va pénétrer dans le conduit d'air soufflé 11 va se condenser par exemple au contact des parois dudit conduit 11. C'est pourquoi, afin d'éviter que cette condensation indésirable ne soit entraînée dans l'habitacle du véhicule, le dispositif 1 selon l'invention présentera de préférence une grille 31 d'évacuation des condensats, située avant le diffuseur 13, qui va piéger ces gouttelettes de liquide condensé. Avantageusement le dispositif 1 comprend en outre un bac 33 à condensat permettant de récolter le liquide de condensation ou condensat 35 depuis la grille d'évacuation 31 des condensats et de l'évacuer par un conduit d'évacuation 37. De préférence le conduit d'évacuation 37 va déboucher dans le réservoir d'eau 25 (ou dans les cartouches préremplies de liquide à nébuliser) afin de pouvoir recycler le condensat 35 de liquide nébulisé en le réintroduisant dans le système de nébulisation. Lorsque le dispositif selon l'invention est intégré dans la console centrale d'un véhicule automobile, il comprend avantageusement un bac à condensats 33 agencé pour permettre l'évacuation du condensat 35 par gravité quelle que soit l'inclinaison du véhicule.

Le flux 39 d'air soufflé additionné de liquide nébulisé traverse alors un diffuseur 13 et est envoyé en direction des passagers assis à l'arrière du véhicule, de préférence en direction de leur tête.

Avantageusement, le dispositif 1 selon l'invention présente en outre un système de commande permettant à l'utilisateur de régler indépendamment la puissance de nébulisation du système de nébulisation et la vitesse de sortie du flux d'air soufflé. De préférence le dispositif 1 selon l'invention peut être actionné pour souffler de l'air avec ou sans injection de liquide nébulisé 27 dans le conduit d'air soufflé 11.

Le dispositif de rafraîchissement selon l'invention peut être installé dans un véhicule présentant par ailleurs un dispositif de climatisation en boucle froide dirigé vers les passagers situés à l'avant du véhicule. Dans une telle configuration le captage de l'air peut se faire soit au niveau des sièges avant et l'air réfrigéré et humidifié est dirigé en direction des passagers arrière. Soit le captage de l'air peut se faire à l'arrière. La mise en route du dispositif de rafraîchissement est avantageusement indépendante de la mise en route du système de climatisation principal. Il peut de préférence être commandé afin que l'air soufflé soit soufflé avec ou sans injection de liquide nébulisé. La commande d'actionnement de la nébulisation peut être mise en route en fonction du degré d'hygrométrie de l'air présent dans l'habitacle. Il est ainsi possible de maintenir constant un degré d'hygrométrie donné pour un confort optimal des passagers.

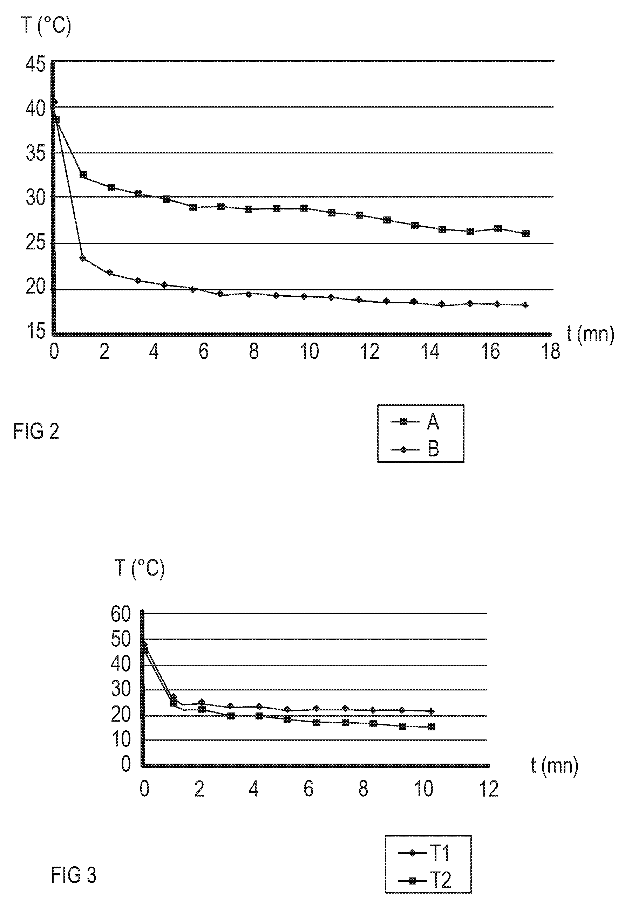

La figure 2 est un graphique montrant les différences de températures constatées entre l'air capté A à l'entrée du dispositif et l'air éjecté B à la sortie du dispositif selon l'invention. On peut constater que le dispositif 1 selon l'invention permet d'abaisser la température de l'air soufflé en direction des passagers arrière d'environ 10 °C par rapport à la température de l'air ambiant dans l'habitacle. Il est précisé que du fait de la finesse des gouttelettes de liquide nébulisé, l'occupant du véhicule ne perçoit pas de sensation d'humidité.

La figure 3 est un graphique de comparaison des prestations obtenues au niveau des sièges situés à l'arrière d'un véhicule entre un système classique de réfrigération par un ventilateur relais T2 et un dispositif selon l'invention T1. La différence est inférieure à 5 °C alors que le dispositif de l'invention a une consommation en énergie bien inférieure à celle du système classique.

L'invention ne se limite pas aux modes de réalisation décrits ci-avant et donnés seulement à titre d'exemple mais englobe toutes les variantes que pourra envisager l'homme du métier dans le cadre de la définition qui en a été donnée.

## Revendications

1. Véhicule comprenant une console centrale et un dispositif (1) de rafraîchissement de l'air de l'habitacle du véhicule, ledit dispositif (1) comprenant :
- un système de nébulisation d'un liquide (27) ;
- des moyens (7) pour capter l'air de l'enceinte et pour l'accélérer de sorte à créer un flux d'air soufflé (9) ;
- des moyens pour injecter du liquide nébulisé (19) généré par le système de nébulisation dans le flux d'air soufflé (9) ainsi créé avant sa sortie du dispositif (1), ledit véhicule étant **caractérisé en ce que** le dispositif (1) de rafraîchissement de l'air est disposé dans la console centrale, en étant indépendant du système de climatisation principal, ventilation ou renouvellement d'air du véhicule, ledit dispositif (1) étant orienté pour que l'air soit soufflé en direction des sièges arrière ; de préférence l'air est capté au niveau des sièges avant du véhicule.

2. Véhicule selon la revendication précédente, **caractérisé en ce que** le dispositif (1) de rafraîchissement comprend un bac à condensats (33) agencé pour permettre l'évacuation du condensat (35) par gravité quelle que soit l'inclinaison du véhicule.

3. Véhicule selon l'une des revendications 1 ou 2, **caractérisé en ce que** les moyens pour capter et accélérer l'air sont constitués par au moins un pulseur d'air (7).

4. Véhicule selon l'une des revendications 1 à 3, **caractérisé en ce que** le système de nébulisation présente une chambre de nébulisation (15) reliée par un conduit de liaison (21) à un conduit (11) d'air soufflé acheminant le flux d'air soufflé (9) en provenance du pulseur d'air (7) vers la sortie (13) dudit dispositif (1).

5. Véhicule selon la revendication 4, **caractérisé en ce que** la chambre de nébulisation (15) est associée à un ventilateur apte à générer dans la dite chambre (15) un flux d'air secondaire qui va entraîner le liquide nébulisé (19) et l'injecter dans le conduit d'air soufflé (11) via le conduit de liaison (21).

6. Véhicule selon la revendication 4, **caractérisé en ce que** le conduit d'air soufflé (11) présente un embranchement définissant un conduit principal et un conduit secondaire, et **en ce que** ledit conduit secondaire débouche sur la chambre de nébulisation (15) de telle sorte à y acheminer un flux d'air secondaire qui va entraîner le liquide nébulisé (19) et l'injecter dans le conduit principal via le conduit de liaison (21).

7. Véhicule selon l'une des revendications 1 à 6, **caractérisé en ce que** la chambre de nébulisation (15) est couplée à un réservoir (25) de liquide à nébuliser (27) et est dotée de moyens de détection du niveau de liquide à nébuliser (27) actionnant son approvisionnement en liquide à nébuliser (27) depuis le réservoir (25) lorsque le niveau de liquide à nébuliser (27) est au-dessous d'un seuil déterminé.

8. Véhicule selon la revendication 7, **caractérisé en ce que** les moyens de détection du niveau du liquide à nébuliser (27) actionnent l'arrêt du système de nébulisation lorsque le niveau de liquide à nébuliser (27) est au-dessous d'un seuil déterminé.

9. Véhicule selon l'une des revendications 7 ou 8, **caractérisé en ce que** le réservoir (25) est constitué par au moins une cartouche préremplie de liquide à nébuliser (27) et/ou comprend des moyens pour recevoir au moins une cartouche additionnelle préremplie contenant un additif concentré à mélanger au liquide à nébuliser (27).

10. Véhicule selon l'une des revendications 1 à 9, **caractérisé en ce que** le dispositif (1) présente en outre au moins une grille (31) d'évacuation des condensats de préférence disposée à l'extrémité du conduit d'air soufflé (11) de telle sorte à être traversée par le flux d'air (9) additionné de liquide nébulisé (19) avant que ledit flux d'air (9) ne soit éjecté dudit dispositif (1) de telle sorte à collecter le condensat (35) éventuel de liquide nébulisé (19) en vue de son évacuation.

11. Véhicule selon la revendication 10, **caractérisé en ce que** le dispositif (1) présente des moyens pour que le condensat (35) présent dans le conduit d'air soufflé (11) et sur la grille (31) d'évacuation des condensats soit évacué par exemple dans un bac à condensats (33), de préférence il présente également des moyens pour acheminer le condensat (35) dans le réservoir (25) associé à la chambre de nébulisation (15) en vue de son recyclage.

12. Véhicule selon l'une des revendications 1 à 11, **caractérisé en ce que** le dispositif (1) comprend en outre un système de commande permettant de régler indépendamment la puissance de nébulisation du système de nébulisation et la vitesse de sortie du flux d'air soufflé.

## Patentansprüche

1. Fahrzeug, eine Mittelkonsole und eine Vorrichtung (1) zum Kühlen der Luft im Fahrgastraum des Fahrzeugs umfassend, wobei die besagte Vorrichtung (1) folgendes umfasst:
- ein System zum Zerstäuben einer Flüssigkeit (27);
- Mittel (7), um die Luft im geschlossenen Raum einzufangen und um sie zu beschleunigen, um eine Blasluftströmung (9) zu erzeugen;
- Mittel zum Injizieren der zerstäubten Flüssigkeit (19), die durch das System zum Zerstäuben erzeugt wird, in die so vor ihrem Austritt aus der Vorrichtung (1) kreierte Blasluftströmung (9), wobei das besagte Fahrzeug **dadurch gekennzeichnet ist, dass** die Vorrichtung (1) zum Kühlen der Luft in der Mittelkonsole angeordnet ist, und dabei vom Hauptklimatisierungssystem, der Lüftung oder der Lufterneuerung des Fahrzeugs unabhängig ist, wobei die besagte Vorrichtung (1) ausgerichtet ist, damit die Luft in Richtung der Rücksitze geblasen wird; und die Luft vorzugsweise im Bereich der Vordersitze des Fahrzeugs eingefangen wird.

2. Fahrzeug nach dem vorherigen Anspruch, **dadurch gekennzeichnet, dass** die Vorrichtung (1) zum Kühlen einen Kondensatbehälter (33) umfasst, der angeordnet ist, um die Ableitung des Kondensats (35) unabhängig von der Neigung des Fahrzeugs durch die Schwerkraft zu ermöglichen.

3. Fahrzeug nach einem der Ansprüche 1 oder 2, **dadurch gekennzeichnet, dass** die Mittel zum Einfangen und Beschleunigen der Luft durch zumindest ein Luftgebläse (7) gebildet werden.

4. Fahrzeug nach einem der Ansprüche 1 bis 3, **dadurch gekennzeichnet, dass** das System zum Zerstäuben eine Zerstäubungskammer (15) aufweist, die über eine Verbindungsleitung (21) mit einer Blasluftleitung (11) verbunden ist, welche die Blasluftströmung (9) aus dem Luftgebläse (7) zum Austritt (13) der besagten Vorrichtung (1) heranführt.

5. Fahrzeug nach Anspruch 4, **dadurch gekennzeichnet, dass** die Zerstäubungskammer (15) mit einem Lüfter verbunden ist, der imstande ist, in der besagten Kammer (15) eine Sekundärluftströmung zu erzeugen, welche die zerstäubte Flüssigkeit (19) antreibt und über die Verbindungsleitung (21) in die Blasluftleitung (11) injiziert.

6. Fahrzeug nach Anspruch 4, **dadurch gekennzeichnet, dass** die Blasluftleitung (11) eine Abzweigung aufweist, die eine Hauptleitung und eine Sekundärleitung definiert, und dadurch, dass die besagte Sekundärleitung in die Zerstäubungskammer (15) mündet, um eine Sekundärluftströmung dorthin zu leiten, welche die zerstäubte Flüssigkeit (19) antreibt und über die Verbindungsleitung (21) in die Hauptleitung injiziert.

7. Fahrzeug nach einem der Ansprüche 1 bis 6, **dadurch gekennzeichnet, dass** die Zerstäubungskammer (15) mit einem Tank (25) für die zu zerstäubende Flüssigkeit (27) verbunden ist, und mit Mitteln zum Erkennen des Füllstandes der zu zerstäubenden Flüssigkeit (27) versehen ist, welche die Versorgung mit zu zerstäubender Flüssigkeit (27) aus dem Tank (25) auslösen, wenn sich der Füllstand der zu zerstäubenden Flüssigkeit (27) unter einem bestimmten Grenzwert befindet.

8. Fahrzeug nach Anspruch 7, **dadurch gekennzeichnet, dass** die Mittel zum Erkennen des Füllstandes der zu zerstäubenden Flüssigkeit (27) den Halt des Systems zum Zerstäuben auslösen, wenn sich der Füllstand der zu zerstäubenden Flüssigkeit (27) unter einem bestimmten Grenzwert befindet.

9. Fahrzeug nach einem der Ansprüche 7 oder 8, **dadurch gekennzeichnet, dass** der Tank (25) aus zumindest einer mit der zu zerstäubenden Flüssigkeit (27) vorgefüllten Patrone besteht, und/ oder Mittel zum Aufnehmen zumindest einer zusätzlichen vorgefüllten Patrone umfasst, die ein konzentriertes Additiv enthält, das der zu zerstäubenden Flüssigkeit (27) beizumengen ist.

10. Fahrzeug nach einem der Ansprüche 1 bis 9, **dadurch gekennzeichnet, dass** die Vorrichtung (1) darüber hinaus zumindest ein Gitter (31) zum Ableiten der Kondensate aufweist, welches vorzugsweise am Ende der Blasluftleitung (11) angeordnet ist, um von der Blasluftströmung (9) samt zerstäubter Flüssigkeit (19) durchströmt zu werden, bevor die besagte Blasluftströmung (9) aus der besagten Vorrichtung (1) ausgestoßen wird, um das eventuelle Kondensat (35) aus zerstäubter Flüssigkeit (19) in Hinblick auf dessen Ableitung aufzusammeln.

11. Fahrzeug nach Anspruch 10, **dadurch gekennzeichnet, dass** die Vorrichtung (1) Mittel aufweist, damit das Kondensat (35), das in der Blasluftleitung (11) und auf dem Gitter (31) zum Ableiten der Kondensate vorhanden ist, beispielsweise in einen Kondensatbehälter (33) abgeleitet wird, und sie vorzugsweise auch Mittel zum Heranführen des Kondensats (35) in den Tank (25) aufweist, welcher in Hinblick auf seine Wiederverwertung mit der Zerstäubungskammer (15) verbunden ist.

12. Fahrzeug nach einem der Ansprüche 1 bis 11, **dadurch gekennzeichnet, dass** die Vorrichtung (1) darüber hinaus ein Steuerungssystem umfasst, mit dem die Zerstäubungsleistung des Systems zum Zerstäuben, sowie die Austrittsgeschwindigkeit der Blasluftströmung unabhängig voneinander geregelt werden können.

## Claims

1. Vehicle having a central console and an air freshener device (1) for the passenger compartment, the said device (1) includes:
- a system for nebulising a liquid (27);
- the means (7) to draw in the passenger compartment air and to accelerate it in order to create a flow of blown air (9);
- the means to inject the nebulised liquid (19) into the blown air flow (9) thus created before leaving the air freshener device (1), the said vehicle being **characterised in that** this air freshener device (1) is positioned in the central console, is independent of the main air-conditioning, ventilation or air renewal system of the said vehicle, the said device (1) being directed so that the air is blown in the direction of the rear seats; for preference, that air is drawn in from around the front seats of the vehicle.

2. Vehicle according to the precedent claim, **characterised in that** the air freshener device (1) includes a condensate tray (33) so arranged to allow the condensate (35) to be gravity drained, no matter what the vehicle angle.

3. Vehicle according to one of the claims 1 or 2 **characterised in that** the means to draw in and accelerate the air includes at least a pulsed air system (7).

4. Vehicle according to one of the claims 1 to 3 **characterised in that** the nebulisation system has a nebulisation chamber (15) connected by a connecting duct (21) to another duct (11) of blown air carrying the flow of blown air (9) coming from the pulsed air system (7) towards the outlet (13) of the said device (1).

5. Vehicle according to claim 4 **characterised in that** the nebulisation chamber (15) is associated with a fan suitable to generate in the said chamber (15) a secondary flow of air which will carry the nebulised liquid (19) and inject it into the blown air duct (11) via the connecting duct (21).

6. Vehicle according to claim 4 **characterised in that** the blown air duct (11) has a junction defining the main duct and the secondary duct, and that the said secondary duct opens onto the nebulisation chamber (15) in such a way as to carry a secondary air flow which will draw in the nebulised liquid (19) and inject it into the main duct via the connecting duct (21).

7. Vehicle according to one of the claims 1 to 6, **characterised in that** the nebulisation chamber (15) is connected to a reservoir (25) of liquid to be nebulised (27), and is fitted with the means to detect the level of the liquid to be nebulised (27), activating its supply of liquid to be nebulised (27) from the reservoir (25) when the level of the liquid to be nebulised (27) is below a determined threshold.

8. Vehicle according to claim 7, **characterised in that** the means for detecting the level of the liquid to be nebulised (27) stops the nebulisation system when the level of the liquid to be nebulised (27) is below a determined threshold.

9. Vehicle according to one of the claims 7 or 8, **characterised in that** the reservoir (25) comprises at least a cartridge pre-filled with liquid to nebulise (27) and/or includes the means to receive at least one additional pre-filled cartridge containing a concentrated additive to mix with the liquid to be nebulised (27).

10. Vehicle according to one of the claims 1 to 9, **characterised in that** the device (1) has, in addition, a grill (31) for evacuating the condensates, for preference at the end of the blown air duct (11) so that it may be traversed by the flow of air (9), complemented with the nebulised air (19), before the said flow of air (9) is ejected from the said device (1) in such a way as to collect the eventual condensate (35) of nebulised liquid (19) in view of its evacuation.

11. Vehicle according to claim 10, **characterised in that** the device (1) has the means so that the condensate (35) present in the blown air duct (11) and on the grill (31), for evacuation of condensates, is evacuated for example into a condensate tray (33) which for preference, also has the means to carry the condensate (35) back to the reservoir (25) associated with the nebulisation chamber (15) with a view to its recycling.

12. Vehicle according to one of the claims 1 to 11 **characterised in that** the device (1) includes, in addition, a control system allowing the independent control of the nebulisation system power and the speed of the blown air.
